# EUROPEAN PATENT APPLICATION

(11) **EP 4 524 426 A1**
(43) Date of publication of application: **19.03.2025**
(21) Application number: 23803328.6
(22) Date of filing: 12.04.2023
(51) Int. Cl.: F16H 1/32, E02F 9/00, H02K 7/116

(54) **REDUCER, DRIVE DEVICE, AND CONSTRUCTION MACHINE**

(30) Priority: 13.05.2022 JP 2022079641
(71) Applicant: Nabtesco Corporation, Tokyo 102-0093 (JP)
(72) Inventor: TAKAHASHI, Masahiro, Tokyo 102-0093 (JP)
(74) Representative: Grünecker Patent- und Rechtsanwälte PartG mbB
(86) International application number: PCT/JP2023/014892
(87) International publication number: WO 2023/218846

(57) **Abstract**

A speed reducer 10 of one embodiment includes a first speed reduction unit 100 and a second speed reduction unit 200. The first speed reduction unit 100 includes a first carrier 101, a first case 102 that surrounds the first carrier 101 and is held rotatable relatively to the first carrier 101, and a first reduction portion 103 having a first center shaft 131, which is a first input portion held by the first carrier 101 and to which rotation is inputted from a drive shaft 303. The second speed reduction unit 200 includes a second carrier 201, a second case 202 that surrounds the second carrier 201 and is held rotatable relatively to the second carrier 201, and a second reduction portion 203 having a second center shaft 231, which is a second input portion held by the second carrier 201 and to which rotation is inputted together with the first center shaft 131 from the drive shaft 303.

## Description

### TECHNICAL FIELD

The present disclosure relates to a speed reducer, a drive device, and a construction machine.

### BACKGROUND

The demand for electrically powered construction equipment is increasing. For example, electric excavators are already in practical use. Excavators have working elements including a boom, arm, and bucket. To operate these working elements by electric motors, for example, a base end of the boom may be connected via a speed reducer to an electric motor supported on a slewable upper structure of the excavator, a base end of the arm may be connected via a speed reducer to an electric motor supported on a tip end of the boom, and the bucket may be connected via a speed reducer to an electric motor supported on a tip end of the boom.

When the slewable upper structure, boom, arm, and bucket are connected as described above, the slewable upper structure may cantilever support the boom via the electric motor and reducer, the boom may cantilever support the arm via the electric motor and reducer, and the arm may cantilever support the bucket via the electric motor and reducer.

### RELEVANT REFERENCE

### LIST OF RELEVANT PATENT LITERATURE

Patent Literature 1: Japanese Patent Application Publication No. Hei 11-343642

### SUMMARY

In the above connection method with the cantilevered supports, the impact transmitted from a work object to each speed reducer during excavator work tends to be very large in both the radial and axial directions. In addition, a large moment can be added to each cantilevered support portion. Therefore, the rigidity and strength of the speed reducers must be increased. It is also required to ensure sufficiently high rigidity and strength at each cantilever support portion.

However, securing a desired rigidity and strength leads to drawbacks of increasing the size of the speed reducers and cantilevered support portions. As a result, the size of the construction machine may be increased and become less easy to use, and the increased weight may lead to a high power consumption.

In view of the above, one object of the present invention is to provide a speed reducer, a drive device, and a construction machine in which a desired rigidity and strength can be easily secured without increasing the size thereof.

A speed reducer according to one aspect of the invention includes: a first speed reduction unit including a first carrier, a first case, and a first reduction portion, the first case surrounding the first carrier and being held by the first carrier so as to be rotatable relatively to the first carrier, the first reduction portion including a first input portion that is held by the first carrier and configured to receive rotation inputted from a drive shaft, the first reduction portion reducing rotation inputted to the first input portion and outputting the reduced rotation to the first case; and a second speed reduction unit including a second carrier, a second case, and a second reduction portion, the second case surrounding the second carrier and being held by the second carrier so as to be rotatable relatively to the second carrier, the second reduction portion including a second input portion that is held by the second carrier and configured to receive rotation inputted from the drive shaft together with the first input portion, the second reduction portion reducing rotation inputted to the second input portion and outputting the reduced rotation to the second case.

The first and second speed reduction units may be arranged so that a first rotation axis of the first case relative to the first carrier and a second rotation axis of the second case relative to the second carrier are disposed on a same straight line and a space is formed between the first speed reduction unit and the second speed reduction unit, and the first and second input portions may be exposed in the space between the first speed reduction unit and the second speed reduction unit.

The first input portion may be a shaft member rotatably supported by the first carrier, and the second input portion may be a shaft member rotatably supported by the second carrier. The first input portion and the second input portion may be aligned so that a rotation axis of the first input portion and a rotation axis of the second input portion are disposed on the same straight line.

The first input portion is a driven gear rotatably supported by the first carrier, and the second input portion is a driven gear rotatably supported by the second carrier. The first input portion and the second input portion may be arranged so that a rotation axes of the first input portion and a rotation axis of the second input portion are disposed on a same straight line or the rotation axis of the first input portion and the rotation axis of the second input portion are separated from each other in a circumferential direction of a concentric circle of the drive shaft and separated from each other in an axial direction of the drive shaft.

In the speed reducer according to the aspect, a shaft member spanning from the first carrier to the second carrier and supported by the first and second carriers may function as the first and second input portions.

In the speed reducer according to the aspect, the reduction ratio of the first reduction portion may be same as that of the second reduction portion.

In the speed reducer according to the aspect, the reduction ratio of the first reduction portion may be different that of the second reduction portion.

In the speed reducer according to the aspect, the motor may be disposed between the first speed reduction unit and the second seed reduction unit. The motor includes a stator and a rotor disposed inside the stator and connected to the drive shaft, and the rotor may be supported by the first and second carriers via the drive shaft. The first speed reduction unit and the second seed reduction unit are provided on one side of the motor.

A construction machine according to another aspect of the invention includes a working element including the drive device. The construction machine includes a main body supporting the working element. The working element includes a working element portion attached to the first case and the second case, and the construction machine main body may support the drive device via the first carrier and the second carrier. The working element includes a first working element portion and a second working element portion, and the first working element portion may support the drive device via the first and second carriers, and the second working element portion is attached to the first and second cases.

According to the aspects of the inventions, it makes it easier to ensure a desired rigidity and strength while reducing the size.

### BRIEF DESCRIPTION OF THE DRAWINGS

Fig. 1 is a sectional view of a drive device equipped with a speed reducer according to a first embodiment.
Fig. 2 is a sectional view of a drive device equipped with a speed reducer according to a second embodiment.
Fig. 3 is a sectional view of a drive device equipped with a speed reducer according to a third embodiment.
Fig. 4 is a side view of a construction machine including the drive device according to the first embodiment.
Fig. 5 is a top view of the construction machine of Fig. 4.

### DESCRIPTION OF THE EMBODIMENTS

Embodiments of the invention will be hereinafter described.

### <First Embodiment>

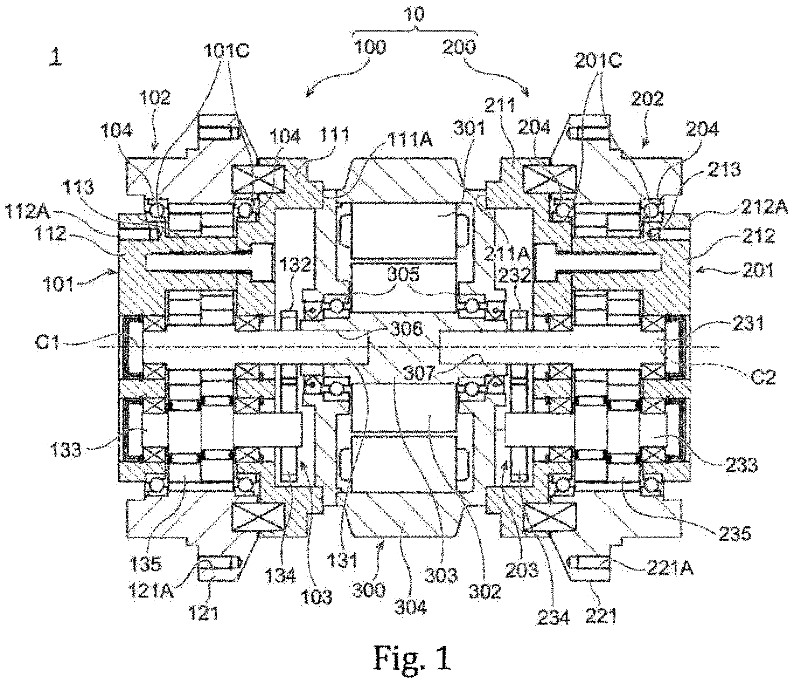

Fig. 1 illustrates a drive device 1 equipped with a speed reducer 10 according to the first embodiment. The drive device 1 includes the speed reducer 10 including a first speed reduction unit 100 and a second speed reduction unit 200, and a motor 300. In this embodiment, the motor 300 is disposed between the first speed reduction unit 100 and the second speed reduction unit 200. In this arrangement, the first speed reduction unit 100, the second speed reduction unit 200, and the motor 300 are integrated as a single unit.

The first speed reduction unit 100 includes a first carrier 101, a first case 102, and a first reduction portion 103. The first carrier 101 is fixed to the motor 300. The first case 102 encloses the first carrier 101 and is rotatable relative to the first carrier 101. The first reduction portion 103 is connected to the motor 300. The first reduction portion 103 receives rotation inputted by the motor 300. The first reduction portion 103 reduces the rotation inputted by the motor 300 and outputs the reduced rotation to the first case 102. In this way, the first case 102 rotates relatively to the first carrier 101.

The first carrier 101 is arranged such that one of its two end surfaces (the right surface in Fig. 1) faces the motor 300. The first carrier 101 has a first support surface 101C, which is circular in section, on its outer peripheral surface between the two end surfaces. A first bearing 104 is fitted in the first support surface 101C.

The first bearing 104 includes an inner ring, an outer ring, and a plurality of rolling elements held between the inner and outer rings. The first case 102 has a cylindrical or annular shape. An inner peripheral surface of the first case 102 is fitted onto the outer ring of the first bearing 104. Thus, the first case 102 is held relatively rotatable to the first carrier 101.

The reference numeral C1 in Fig. 1 indicates a first rotation axis of the first case 102 relative to the first carrier 101. The first rotation axis C1 passes through the centers of the first support surface 101C and the first bearing 104.

The first carrier 101 includes a first inner end plate 111, a first outer end plate 112, and a first connecting post 113 that connects the first inner end plate 111 and the first outer end plate 112.

The first inner end plate 111 and the first outer end plate 112 respectively have a substantially cylindrical or annular shape. The first inner end plate 111 and the first outer end plate 112 surround the first rotation axis C1. The central axis of the first inner end plate 111 and the central axis of the first outer end plate 112 coincide with the first rotation axis C1. The first inner end plate 111 and the first outer end plate 112 may be formed in a solid cylindrical or disc-shape depending on the specifications, especially the specifications of the first reduction portion 103.

The first inner end plate 111 faces the motor 300. The first inner end plate 111 includes a first fixing portion 111A that is fixed to the motor 300. The first fixing portion 111A is provided on an outer peripheral portion of the first inner end plate 111. The first fixing portion 111A may be a portion having a hole to receive a fastening member that is inserted into a part of the motor 300.

The first outer end plate 112 is disposed farther from the motor 300 than the first inner end plate 111 in the axial direction of the first case 102 along which the first rotation axis C1 extends. The first outer end plate 112 has a first fastening portion 112A having a fastening hole extending from an externally facing surface toward the first inner end plate 111. The first fastening portion 112A is used, for example, to secure the drive device 1 to a support portion that supports the drive device 1.

The first connecting post 113 extends along the first rotation axis rotation C1 between the first inner end plate 111 and the first outer end plate 112. The first connecting post 113 connects the first inner end plate 111 and the first outer end plate 112. The first carrier 101 includes a plurality of first connecting posts 113. The plurality of first connecting posts 113 are arranged spaced apart from each other around the first rotation axis C1. The first inner end plate 111 and the first outer end plate 112 support a first crankshaft 133 described below, which is a component of the first reduction portion 103. The first inner end plate 111 and the first outer end plate 112 support the first crankshaft 133 without interfering with the first connecting posts 113.

As mentioned above, the first inner end plate 111 and the first outer end plate 112 have respectively a substantially cylindrical or annular shape. An inner peripheral surface of the first inner end plate 111 and the inner peripheral surface of the first outer end plate 112 form a support hole for rotatably supporting a first center shaft 131 described below, which is a component of the first reduction portion 103, via bearings.

The first case 102 is rotatably supported on the first support surface 101C, which is the outer periphery of the first carrier 101 described above. The first case 102 surrounds the outer peripheral surface of the first carrier 101. The first case 102 is cylindrical

The first case 102 includes a first mounting portion 121 including a first fastening hole 121A extending parallel to the first rotation axis C1. The first mounting portion 121 is for fixing and holding, for example, an arm member, a link member, or the like. The first mounting portion 121 is provided on an outer peripheral portion of the first case 102.

The first speed reduction unit 100 is configured as an eccentric oscillating type speed reduction mechanism as an example. The first reduction portion 103 includes a first center shaft 131, a first input gear 132, a first crankshaft 133, a first relay gear 134, and a first external gear 135 that is an eccentric oscillating gear.

The first center shaft 131 is rotatably held via bearings by the inner peripheral surface of the first inner end plate 111 and the inner peripheral surface of the first outer end plate 112. The first center shaft 131 extends from the first inner end plate 111 toward the motor 300 side, in other words, toward the second speed reduction unit 200. A first input gear 132 is provided on the portion of the first center shaft 131 protruding from the first inner end plate 111.

The first crankshaft 133 is held rotatably via the bearings and the first crankshaft 133 extends from the first inner end plate 111 to the first outer end plate 112. The first crankshaft 133 protrudes out from the first inner end plate 111 toward the motor 300 side, in other words, toward the second reduction unit 200. A first relay gear 134 is provided on the portion of the first crankshaft 133 protruding from the first inner end plate 111. The first relay gear 134 meshes with the first input gear 132. The first external gear 135 is provided on the portion of the first crankshaft 133 situated between the first inner end plate 111 and the first outer end plate 112. The first external gear 135 meshes with the internal gear provided on the inner peripheral surface of the first case 102.

In the embodiment, the first center shaft 131 is connected to the motor 300, more specifically, to the drive shaft 303 of the motor 300, which will be described in detail later. The first center shaft 131 corresponds to a first input portion in the invention, which is held by the first carrier 101 and receives rotation inputted from the drive shaft 303.

The second speed reduction unit 200 includes a second carrier 201, a second case 202, and a second reduction portion 203. The second carrier 201 is fixed to the motor 300. The second case 202 surrounds the second carrier 201 and is held rotatable relatively to the second carrier 201. The second reduction portion 203 is connected to the motor 300. The second reduction portion 203 receives rotation inputted from the motor 300. The second reduction portion 203 decelerates the rotation inputted from the motor 300 and outputs the reduced rotation to the second case 202. In this way, the second case 202 rotates relative to the second carrier 201. In other words, in this embodiment, the rotation of the motor 300 is commonly inputted to the first speed reduction unit 100 and the second speed reduction unit 200.

The second carrier 201 is arranged such that one of its two end surfaces (the left surface in Fig. 1) faces the motor 300. The second carrier 201 has a second support surface 201C, which is circular in section, on its outer peripheral surface between the two end surfaces. A second bearing 204 is fitted in the second support surface 201C.

The second bearing 204 includes an inner ring, an outer ring, and a plurality of rolling elements held between the inner and outer rings. The second case 202 has a cylindrical or annular shape. An inner peripheral surface of the second case 202 is fitted onto the outer ring of the second bearing 204. Thus, the second case 202 is held relatively rotatable to the second carrier 201.

The reference numeral C2 in Fig. 1 indicates a second rotation axis of the second case 202 relative to the second carrier 201. The second rotation axis C2 passes through the centers of the second support surface 201C and the second bearing 204. The first rotation axis C1 of the first case 102 and the second rotation axis C2 of the second case 202 are disposed on the same straight line. In other words, the first case 102 and the second case 202 are disposed coaxially.

The second carrier 201 includes a second inner end plate 211, a second outer end plate 212, and a second connecting post 213 that connects the second inner end plate 211 and the second outer end plate 212.

The second inner end plate 211 and the second outer end plate 212 respectively have a substantially cylindrical or annular shape. The second inner end plate 211 and the second outer end plate 212 surround the first rotation axis C1. The central axis of the second inner end plate 211 and the central axis of the second outer end plate 212 coincide with the second rotation axis C2. The second inner end plate 211 and the second outer end plate 212 may be formed in a solid cylindrical or disc-shape depending on the specifications, especially the specifications of the second reduction portion 203.

The second inner end plate 211 faces the motor 300. The second inner end plate 211 includes a second fixing portion 211A that is fixed to the motor 300. The second fixing portion 211A is provided on an outer peripheral portion of the second inner end plate 211. The second fixing portion 211A may be a portion having a hole to receive a fastening member that is inserted into a part of the motor 300.

The second outer end plate 212 is disposed farther from the motor 300 than the second inner end plate 211 in the axial direction of the second case 202 along which the second rotation axis C2 extends. The second outer end plate 212 has a second fastening portion 212A having a fastening hole extending from an externally facing surface toward the second inner end plate 211. The second fastening portion 212A is used, for example, to secure the drive device 1 to a support portion that supports the drive device 1.

The second connecting post 213 extends along the second rotation axis rotation C2 between the second inner end plate 211 and the second outer end plate 212. The second connecting post 213 connects the second inner end plate 211 and the second outer end plate 212. The second carrier 201 includes a plurality of second connecting posts 213. The plurality of second connecting posts 213 are arranged spaced apart from each other around the second rotation axis C2. The second inner end plate 211 and the second outer end plate 212 support a second crankshaft 233 described below, which is a component of the second reduction portion 203. The second inner end plate 211 and the second outer end plate 212 support the second crankshaft 233 without interfering with the second connecting posts 213.

As mentioned above, the second inner end plate 211 and the second outer end plate 212 have respectively a substantially cylindrical or annular shape. An inner peripheral surface of the second inner end plate 211 and the inner peripheral surface of the second outer end plate 212 form a support hole for rotatably supporting a second center shaft 231 described below, which is a component of the second reduction portion 203, via bearings.

The second case 202 is rotatably supported on the second support surface 201C, which is the outer periphery of the second carrier 201 described above. The second case 202 surrounds the outer peripheral surface of the second carrier 201. The second case 202 is cylindrical

The second case 202 includes a second mounting portion 221 including a second fastening hole 221A extending parallel to the second rotation axis C2. The second mounting portion 221 is for fixing and holding, for example, an arm member, a link member, or the like. The second mounting portion 221 is provided on an outer peripheral portion of the second case 202.

The second speed reduction unit 200 is also configured as an eccentric oscillating type speed reduction mechanism as an example. The second reduction portion 203 includes the second center shaft 231, a second input gear 232, a second crankshaft 233, a second relay gear 234, and a second external gear 235 that is an eccentric oscillating gear. In the embodiment, the second center shaft 231 is connected to the motor 300, more specifically, to the drive shaft 303 of the motor 300, which will be described in detail later. The second center shaft 231 corresponds to a second input portion in the invention, which is held by the second carrier 201 and receives rotation inputted from the drive shaft 303. The drive shaft 303 inputs rotation to both the second center shaft 231 and the first center shaft 131 in the first speed reduction unit 100.

The components of the second reduction portion 203 are the same as those (131 to 135) of the first reduction portion 103. Since the components of the second reduction portion 203 are held on the second carrier 201 in the same manner as the components of the first reduction portion 103 are held on the first carrier 101, detailed descriptions of the components of the second reduction portion 203 will be omitted.

Positional relationship between the first center shaft 131 and the second center shaft 231 with respect to the first input portion will now be described. The first speed reduction unit 100 and the second speed reduction unit 200 are arranged such that the first rotation axis C1 of the first case 102 and the second rotation axis C2 of the second case 202 are disposed on the same straight line. A space is provided between the first speed reduction unit 100 and the second speed reduction unit 200.

In the embodiment, the first center shaft 131 and the second center shaft 231 are exposed in the space between the first speed reduction unit 100 and the second speed reduction unit 200. When the first speed reduction unit 100, second speed reduction unit 200, and motor 300 are integrated as a single body as shown in the drawing, the motor 300 is situated in the space between the first speed reduction unit 100 and second speed reduction unit 200.

The first center shaft 131 and the second center shaft 231 are aligned so that the rotation axis of the first center shaft 131 and the rotation axis of the second center shaft 231 are disposed on the same straight line. The rotation axis of the first center shaft 131 coincides with the first rotation axis C1. The second center shaft 231 axis of rotation coincides with the second axis of rotation C2.

The first speed reduction unit 100 and the second speed reduction unit 200 of the embodiment are eccentric oscillating type reduction mechanisms in which the crankshaft is offset from the rotation center of the case. Alternatively, the first speed reduction unit 100 and the second speed reduction unit 200 may be configured as a center-crank eccentric-oscillating type reduction gear mechanism. Alternatively, the first speed reduction unit 100 and the second speed reduction unit 200 may be configured as a planetary-gear type reduction mechanism. In this case, the first reduction portion 103 may include a planetary gear that spins on its own axis by rotation inputted to the first input portion, which is configured, for example, as a shaft member that rotates in conjunction with the sun gear. The planetary gear revolves about the first rotation axis C1 of the first case 102 while spinning on its own axis and meshing with an the internal gear provided on the inner peripheral surface of the first case 102.

The reduction ratio of the first reduction portion 103 is the same as that of the second reduction portion 203. Alternatively, the reduction ratio of the first reduction portion 103 and the reduction ratio of the second reduction portion 203 may be different.

The motor 300 is an electric motor. The motor 300 includes a stator 301, a rotor 302, the drive shaft 303 attached to the rotor 302, and a case 304. The motor 300 is attached to the first fixing portion 111A and the second carrier 201 in a state where the motor 300 is sandwiched between the first fixing portion 111A in the first carrier 101 and the second fixing portion 211A in the second carrier 201.

The rotor 302 and drive shaft 303 are arranged inside the cylindrical stator 301. The stator 301 is covered by the case 304 and secured to the inner peripheral surface of the case 304. Specifically, the motor 300 is secured to the first carrier 101 and the second carrier 201 via the case 304. The case 304 is attached to the first fixing portion 111A of the first carrier 101 and the second fixing portion 211A of the second carrier 201.

The rotor 302 and drive shaft 303 rotate together relative to the stator 301. The drive shaft 303 is rotatably supported by the case 304 via a bearing 305. As a result, the rotor 302 and the drive shaft 303 can rotate relative to the stator 301.

The drive shaft 303 extends from the rotor 302 in the axial directions of the motor 300. The portions of the drive shaft 303 extending out from the rotor 302 on each side are rotatably supported by the case 304 via the bearing 305. A first hole 306 formed in one end surface of the drive shaft 303 extends toward the other end surface. A second hole 307 formed in the other end surface of the drive shaft 303 extends toward the one end surface.

A part of the outer peripheral of the first center shaft 131, which is the shaft member, is fitted into the first hole 306. The first hole 306 and the first center shaft 131 are connected so that they do not rotate relative to each other. A part of the outer peripheral of the second center shaft 231, which is the shaft member, is fitted into the second hole 307. The second hole 307 and the second center shaft 231 are connected so that they do not rotate relative to each other. Thus, the first center shaft 131 and the second center shaft 231 rotate with the rotation of the motor 300.

The following is an example of the operation of the drive unit 1.

For example, the first carrier 101 is fixed to the support portion supporting the drive unit 1 by the first fastening portion 112A of the first outer end plate 112, and the second carrier 201 is fixed to the support portion supporting the drive unit 1 by the second fastening portion 212A of the second outer end plate 212. When the drive shaft 303 of the motor 300 rotates, rotation is inputted to the first center shaft 131 and the second center shaft 231.

Once the first center shaft 131 is rotated, the first crankshaft 133 rotates via the first input gear 132 and the first relay gear 134. The first crankshaft 133 oscillatorily rotates the first external gear 135. The rotation is then outputted from the first external gear 135 to the first case 102 at a reduced speed than that of the input. This causes the first case 102 to rotate relative to the first carrier 101.

When the second center shaft 231 rotates, the rotation is transmitted to the second crankshaft 233 via the second input gear 232 and the second relay gear 234. The second crankshaft 233 then oscillatorily rotates the second external gear 235. The second external gear 235 then outputs a reduced rotation to the second case 202 compared to the input rotation. This causes the second case 202 to rotate relative to the second carrier 201.

Since the reduction ratio of the first reduction portion 103 and the reduction ratio of the second reduction portion 203 are the same, when a single member is attached to the first case 102 and the second case 202, torque can be applied to the attached member from the first case 102 and the second case 202 simultaneously. The member may be respectively attached to the first case 102 and the second case 202, in which case torque is applied to each member separately.

In the embodiment described above, the speed reducer 10 includes the first speed reduction unit 100 and the second speed reduction unit 200. The first speed reduction unit 100 includes the first carrier 101, the first case 102 that surrounds the first carrier 101 and is held rotatable relatively to the first carrier 101, and the first reduction portion 103. The first reduction portion 103 includes the first center shaft 131, which is the first input portion held by the first carrier 101 and to which rotation is inputted from the drive shaft 303. The first reduction portion 103 reduces the rotation inputted to the first center shaft 131 and outputs the reduced rotation to the first case 102. The second speed reduction unit 200 includes the second carrier 201, the second case 202 that surrounds the second carrier 201 and is held rotatable relatively to the carrier 201, and the second reduction portion 203. The second reduction portion 203 includes the second center shaft 231 that is held by the second carrier 201. The drive shaft 303 inputs rotation to both the first center shaft 131 and the second center shaft 231. The second reduction portion 203 reduces the rotation inputted to the second center shaft 231 and outputs the reduced rotation to the second case 202.

The drive device 1 includes the first speed reduction unit 100, the second speed reduction unit 200, and the motor 300. The drive device 1 connects the drive shaft 303 of the motor 300 to the first center shaft 131 of the first speed reduction unit 100 and the second center shaft 231 of the second speed reduction unit 200 in order to integrate the motor 300, first speed reduction unit 100, and second speed reduction unit 200.

In this configuration, input of the single drive shaft 303 can cause both the first speed reduction unit 100 and the second speed reduction unit 200 to operate. In this case, the first speed reduction unit 100 and the second speed reduction unit 200 are connected by the drive shaft 303. Thus, the load on the first speed reduction unit 100 and/or the second speed reduction unit 200 can be distributed between the first speed reduction unit 100 and the second speed reduction unit 200. This makes it easier to ensure a desired rigidity and strength of the speed reducer 10 while reducing its size.

The first speed reduction unit 100 and the second speed reduction unit 200 are arranged such that the first rotation axis C1 of the first case 102 relative to the first carrier 101 the and the second rotation axis C2 of the second case 202 relative to the second carrier 201 are disposed on the same straight line. The space is provided between the first speed reduction unit 100 and the second speed reduction unit 200. Further, the first center shaft 131 and the second center shaft 231 are exposed in the space between the first speed reduction unit 100 and the second speed reduction unit 200.

In this configuration, the first center shaft 131 and the second center shaft 231 can be connected to the drive shaft 303 disposed in the space between the first speed reduction unit 100 and the second speed reduction unit 200. Thus, the complexity of the connecting structure between the drive shaft 303 and the first speed reduction unit 100 and second speed reduction unit 200 can be reduced and the size increase can be prevented. In the embodiment, the motor 300 is disposed between the first speed reduction unit 100 and the second speed reduction unit 200 and integrated with the first speed reduction unit 100 and the second speed reduction unit 200. Rotation is inputted to the first center shaft 131 of the first speed reduction unit 100 and the second center shaft 231 of the second speed reduction unit 200 from the drive shaft 303 disposed between the first and second speed reduction units 100 and 200. In this configuration, the length of the drive shaft 303 is reduced and the transmission structure is simplified.

In the embodiment, the first center shaft 131, which is the first input portion, is the shaft member rotatably supported by the first carrier 101, and the second center shaft 231, which is the second input portion, is the shaft member rotatably supported by the second carrier 201. The first center shaft 131 and the second center shaft 231 are aligned so that their rotation axes extend on the same straight line. In this configuration, the rotation can be transmitted from the drive shaft 303 to the first reduction portion 103 and the second reduction portion 203 without requiring a more complex and larger structure of the drive shaft 303. Therefore, this configuration is advantageous in terms of reducing the complexity and size of the connecting structure between the drive shaft 303 and the first speed reduction unit 100 and the second speed reduction unit 200.

### <Second Embodiment>

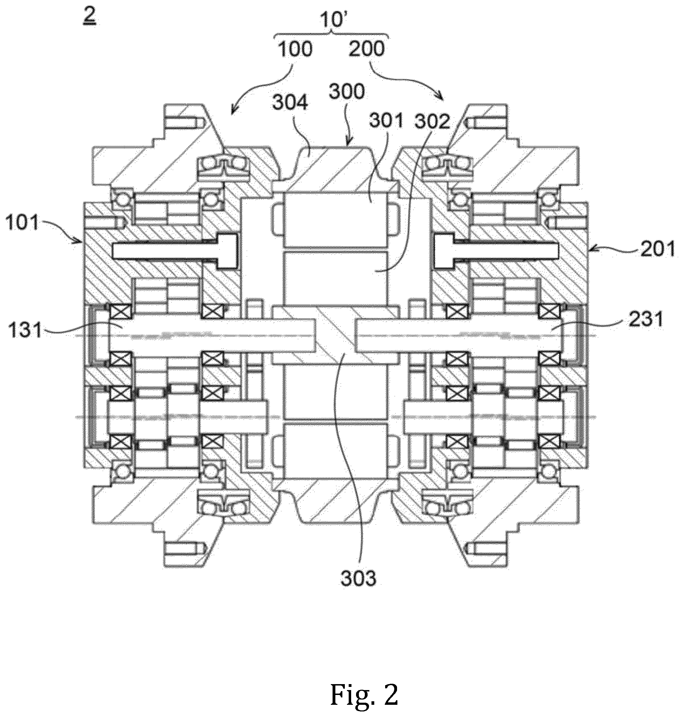

The following describes a drive device 2 including a speed reducer 10' according to the second embodiment with reference to Fig. 2. The constituents of this embodiment identical to those of the first embodiment will be denoted by the same reference signs, and redundant description of such constituents will be omitted. The second embodiment differs from the first embodiment in that the bearing 305 is not provided in the motor 300.

Specifically, in the motor 300, the rotor 302 and drive shaft 303 are not rotatably supported by the case 304. Instead, the rotor 302 is supported by the first carrier 101 and the second carrier 201 via the drive shaft 303. More specifically, the drive shaft 303 is connected to the first center shaft 131 and the second center shaft 231, so that it is supported by the first carrier and the second carrier 201 via the first center shaft 131 and the second center shaft 231. Thus, the rotor 302 is supported by the first carrier 101 and the second carrier 201 via the drive shaft 303.

In the second embodiment, the motor 304 in particular of the case 300 can be simplified and the shaft length of the drive shaft 303 can be reduced. In addition, some components such as bearings can be omitted and thus the number of components can be reduced. Therefore, it is advantageous in terms of size reduction of the drive device 2 and reduced cost of components.

### <Third Embodiment>

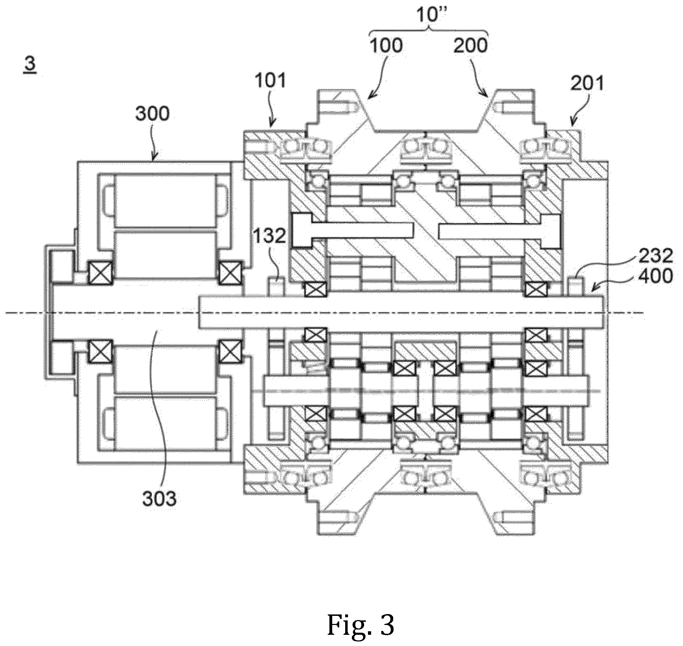

The following describes a drive device 3 including a speed reducer 10" according to the third embodiment with reference to Fig. 3. The constituents of this embodiment identical to those of the first and second embodiments will be denoted by the same reference signs, and redundant description of such constituents will be omitted. In the third embodiment, the arrangement of the first reduction unit 100, second reduction unit 200 and motor 300 differs from the first and second embodiments.

Specifically, the first speed reduction unit 100 and the second speed reduction unit 200 are disposed on one side of the motor 300. The motor 300, first speed reduction unit 100, and second speed reduction unit 200 are integrated into a single body.

In a speed reducer 10", a shaft member 400 is provided so that the shaft member spans from the first carrier 101 to the second carrier 201. The shaft member 400 extends from each of the first carrier 101 and the second carrier 201. The portion of the shaft member 400 extending out from the first carrier 101 is connected to the drive shaft 303 of the motor 300 and is provided with the first input gear 132. The portion of the shaft member 400 extending out from the second carrier 201 is provided with the second input gear 232.

In the embodiment, the shaft member 400 functions as the first input portion in the first reduction portion 103, which receives rotation from the drive shaft 303, and the second input portion in the second reduction portion 203, which receives rotation from the drive shaft 303. In this configuration, the number of components can be reduced because rotation is inputted to the first reduction portion 103 and the second reduction portion 203 by the single shaft member 400.

### <Construction Machine>

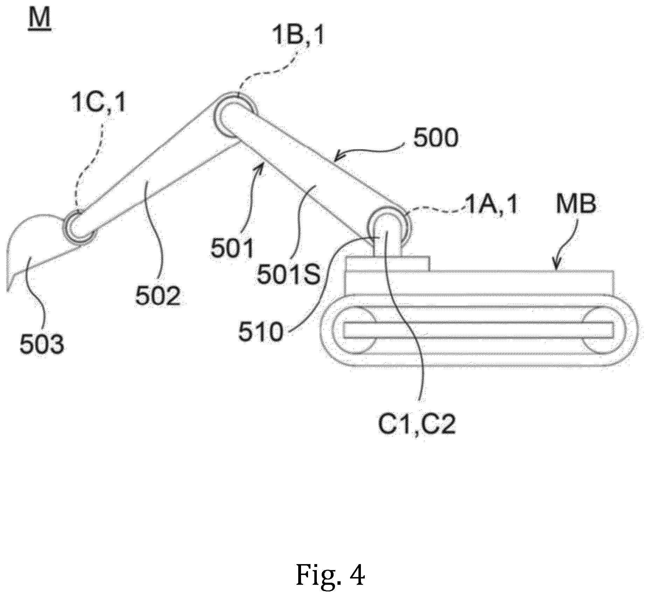

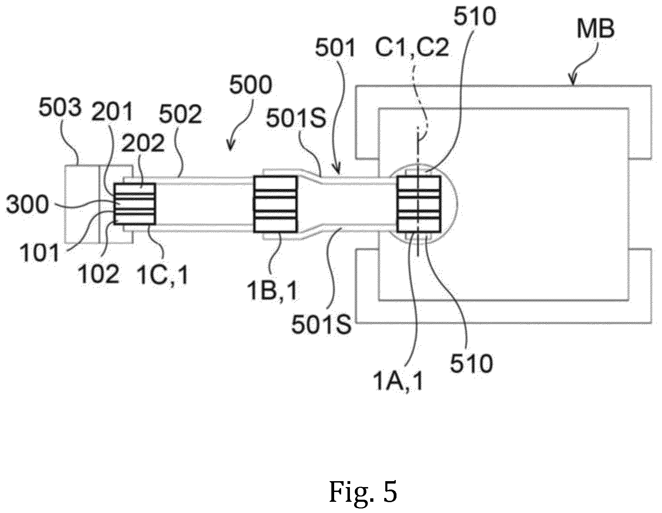

Fig. 4 is a side view of a construction machine M including the drive device 1 according to the first embodiment, and Fig. 5 is a top view of the construction machine M. The construction machine M shown in Fig. 4 is an excavator. The construction machine M includes working elements 500 that is connected to the main body ME of the construction machine. The construction machine M may include the drive device 2 according to the second embodiment or the drive device 3 according to the third embodiment.

The working elements 500 include a boom 501, an arm 502, and a bucket 503 as work element portions, and the three drive devices 1. Among the three drive devices 1, the one between the construction machine main body MB and the boom 501 is hereinafter referred to as a first drive device 1A, the one between the boom 501 and the arm 502 as a second drive device 1B, and the one between the arm 502 and the bucket 503 as a third drive device 1C.

The proximal portion of the boom 501 is rotatably connected to the construction machine main body MB via the first drive device 1A. The construction machine main body MB has a pair of support portions 510 that are separated from each other. The first drive device 1A is disposed between the pair of support portions 510. One of the pair of support portions 510 secures the first outer end plate 112 of the first carrier 101, and the other of the pair of support portions 510 secures the second outer end plate 212 of the second carrier 201 (see Fig. 1). The pair of support portions 510 support the first drive device 1A with at least the first case 102 and the second case 202 being separated from the construction machine main body MB and allowed to rotate. In other words, the construction machine main body MB supports the first drive device 1A via the first carrier 101 and the second carrier 201.

The proximal portion of the boom 501 is then attached to the first case 102 and the second case 202. This causes the boom 501 to rotate about the first and second rotational axes C1 and C2, which are positioned on the same straight line, in response to the rotation of the motor 300.

Specifically, the boom 501 in the embodiment includes a pair of boom side plates 501S that face each other and extend in the longitudinal direction of the boom 501. A proximal portion of one of the pair of boom side plates 501S is attached to the first case 102, and a proximal portion of the other of the pair of boom side plates 501S is attached to the second case 202.

Tip portions of the pair of boom side plates 501S hold the second drive device 1B therebetween to support it. Specifically, the tip portion of one of the two boom side plates 501S fixes the first outer end plate 112 of the first carrier 101, and the tip portion of the other of the two boom side plates 501S fixes the second outer end plate 212 of the second carrier 201. In other words, the boom 501 supports the first drive device 1A via the first carrier 101 and the second carrier 201.

The proximal portion of the arm 502 is then attached to the first case 102 and second case 202 of the second drive device 1B. The arm 502 rotates about the first and second rotational axes C1 and C2 in response to the rotation of the motor 300 in the second drive device 1B. The arm 502 includes a pair of side plates likewise the boom 501. How the tip portion of the arm 502 supports the third drive unit 1C is same as the second drive device 1B, and therefore, the description is omitted.

The construction machine M is equipped with the drive devices 1A to 1C so that the construction machine M is electrified while reducing the size and weight increase. The load transmitted from the boom 501 to the first drive device 1A, for example, is distributed between the first speed reduction unit 100 and the second speed reduction unit 200, thereby reducing the risk of damage to the speed reducer 10. The drive devices 1A to 1C are installed so that they do not protrude from the working elements 500. This minimizes the risk of the drive devices 1A to 1C contacting with the ground or structures on which the construction machine M is working, and minimizes the risk of the drive devices 1A to 1C being damaged.

Aspects of the invention are not limited to the foregoing embodiments and embrace various modifications conceivable by those skilled in the art. Advantageous effects of the invention are also not limited to those described above. That is, various additions, changes, and partial deletions are possible in a range of not departing from the conceptual ideas and spirit of the present invention derived from contents defined in the claims and the equivalents thereof. In the embodiments disclosed herein, a member formed of multiple components may be integrated into a single component, or conversely, a member formed of a single component may be divided into multiple components. Irrespective of whether or not the components are integrated, they are acceptable as long as they are configured to attain the object of the invention.

For example, in the embodiments described above, a portion of the outer peripheral surface of the first center shaft 131 is fitted into the hole first 306 in the drive shaft 303 of the motor 300. The first hole 306 and the first center shaft 131 are connected so that they do not rotate relative to each other. Alternatively, it is also possible that the first center shaft 131 has a hole extending axially from its end surface, and the drive shaft 303 is inserted into this hole. In this case, the first center shaft 131 still corresponds to the first input portion.

It is also possible that the first reduction portion 103 in the speed reducer 10 does not include the first center shaft 131 and the first input gear 132. In this case, a drive gear on the drive shaft 113 of the motor 300 may be meshed with the first relay gear 134 to transmit rotation. In this case, the first relay gear 134, which is the driven gear, corresponds to the first input portion. Similarly, the second relay gear 234 in the second reduction portion 203 may function as the driven gear, which is the second input portion.

When the first input portion in the present invention is the driven gear (e.g., first relay gear 134) rotatably supported by the first carrier 101 and the second input portion in the present invention is the driven gear (e.g., second relay gear 234) rotatably supported by the second carrier 201 as described above, the driven gear corresponding to the first input portion and the driven gear corresponding to the second input portion may be arranged so that their rotation axes are disposed on the same straight line or so that the rotation axes are separated from each other in the circumferential direction of a concentric circle of the drive shaft 303 and are also separated from each other in the axial direction of the drive shaft 303.

### LIST OF REFERENCE NUMBERS

1, 2, 3...drive device, 10, 10', 10‴...speed reducer, 100...first speed reduction unit, 101...first carrier, 101C...first support surface, 102...first case, 103...first reduction portion, 104...first bearing, 111...first inner end plate, 111A...first fixing portion, 112...first outer end plate, 112A...first fastening portion, 113...first connecting post, 121...first mounting portion, 121A...first fastening hole, 131...first center shaft, 132...first input gear, 133...first crankshaft, 134...first relay gear, 135...first external gear, 200...second speed reduction unit, 201...second carrier, 201C...second support surface, 202...second case, 203...second speed reduction unit, 204...second bearing, 211...second inner end plate, 211A...second fixing portion, 212...second outer end plate, 212A...second fastening portion, 213...second connecting post, 221 ...second mounting portion, 221A...second fastening hole, 231...second center shaft, 232...second input gear, 233...second crankshaft, 234...second relay gear, 235...second external gear, 300...motor, 301...stator, 302...rotor, 303...drive shaft, 304...case, 305...bearing, 306...first hole, 307...second hole, 400...shaft member, C1...first rotation axis, C2...second rotation axis, M...construction machine, MB...construction machine main body, 500...working element, 501...boom, 501S...boom side plate, 502...arm, 503...bucket, 510...support portion

## Claims

1. A speed reducer comprising:
a first speed reduction unit including a first carrier, a first case, and a first reduction portion, the first case surrounding the first carrier and being held by the first carrier so as to be rotatable relatively to the first carrier, the first reduction portion including a first input portion that is held by the first carrier and configured to receive rotation inputted from a drive shaft, the first reduction portion reducing rotation inputted to the first input portion and outputting the reduced rotation to the first case; and
a second speed reduction unit including a second carrier, a second case, and a second reduction portion, the second case surrounding the second carrier and being held by the second carrier so as to be rotatable relatively to the second carrier, the second reduction portion including a second input portion that is held by the second carrier and configured to receive rotation inputted from the drive shaft together with the first input portion, the second reduction portion reducing rotation inputted to the second input portion and outputting the reduced rotation to the second case.

2. The speed reducer of claim 1, wherein the first and second speed reduction units are arranged so that a first rotation axis of the first case relative to the first carrier and a second rotation axis of the second case relative to the second carrier are disposed on a same straight line and a space is formed between the first speed reduction unit and the second speed reduction unit, and
wherein the first and second input portions are exposed in the space between the first speed reduction unit and the second speed reduction unit.

3. The speed reducer of claim 2, wherein the first input portion is a shaft member rotatably supported by the first carrier, and the second input portion is a shaft member rotatably supported by the second carrier, and
wherein the first input portion and the second input portion are aligned so that a rotation axis of the first input portion and a rotation axis of the second input portion are disposed on the same straight line.

4. The speed reducer of claim 2, wherein the first input portion is a driven gear rotatably supported by the first carrier, and the second input portion is a driven gear rotatably supported by the second carrier, and
wherein the first input portion and the second input portion are arranged so that a rotation axis of the first input portion and a rotation axis of the second input portion are disposed on a same straight line or the rotation axis of the first input portion and the rotation axis of the second input portion are separated from each other in a circumferential direction of a concentric circle of the drive shaft and separated from each other in an axial direction of the drive shaft.

5. The speed reducer of claim 1, wherein a shaft member spanning from the first carrier to the second carrier and supported by the first and second carriers functions as the first and second input portions.

6. The speed reducer of claim 1, wherein a reduction ratio of the first reduction portion is same as a reduction ratio of the second reduction portion.

7. The speed reducer of claim 1, wherein a reduction ratio of the first reduction portion is different from a reduction ratio of the second reduction portion.

8. A drive device comprising:
the speed reducer of any one of claims 1 to 7; and
a motor including the drive shaft.

9. The drive device of claim 8, wherein the motor is disposed between the first speed reduction unit and the second seed reduction unit.

10. The drive device of claim 9, wherein the motor includes a stator and a rotor, the rotor is disposed inside the stator and connected to the drive shaft, and
wherein the rotor is supported by the first and second carriers via the drive shaft.

11. The drive device of claim 8, wherein the first speed reduction unit and the second seed reduction unit are disposed on one side of the motor.

12. A construction machine comprising a working element including the drive device of claim 8.

13. The construction machine of claim 12, further comprising a construction machine main body supporting the working element,
wherein the working element includes a working element portion attached to the first case and the second case, and
wherein the construction machine main body supports the drive device via the first carrier and the second carrier.

14. The construction machine of claim 12, wherein the working element includes a first working element portion and a second working element portion, and
wherein the first working element portion supports the drive device via the first and second carriers, and the second working element portion is attached to the first and second cases.
